# EUROPEAN PATENT SPECIFICATION

(11) **EP 3 971 614 B1**
(45) Date of publication and mention of the grant of the patent: **13.08.2025**
(21) Application number: 20196401.2
(22) Date of filing: 16.09.2020
(51) Int. Cl.: G01S 17/34, G01S 17/894, G01S 7/481, G01S 7/4914

(54) **SYSTEM AND METHOD FOR DETERMINING A RANGE OF A SCENE USING FMCW LIDAR IMAGING**
SYSTEM UND VERFAHREN ZUR BESTIMMUNG EINER ENTFERNUNG EINER SZENE UNTER VERWENDUNG DER FMCW-LIDAR-ABBILDUNG
SYSTÈME ET PROCÉDÉ PERMETTANT DE DÉTERMINER UNE DISTANCE D'UNE SCÈNE À L'AIDE DE L'IMAGERIE LIDAR À ONDE ENTRETENUE MODULÉE EN FRÉQUENCE (FMCW)

(43) Date of publication of application: 23.03.2022
(73) Proprietor: Imec VZW, 3001 Leuven (BE)
(72) Inventor: Kjellman, Mr. Jon, 3001 Leuven (BE); Dahlem, Mr. Marcus, 3001 Leuven (BE); Rottenberg, Mr. Xavier, 3001 Leuven (BE); Jansen, Mr. Roelof, 3001 Leuven (BE)
(74) Representative: Patent Department IMEC

(56) References cited:
- WO-A1-99/06853
- FIROOZ AFLATOUNI ET AL: "Nanophotonic coherent imager", OPTICS EXPRESS, vol. 23, no. 4, 19 February 2015 (2015-02-19), pages 5117, XP055764834, DOI: 10.1364/OE.23.005117
- AUDE MARTIN ET AL: "Photonic Integrated Circuit-Based FMCW Coherent LiDAR", JOURNAL OF LIGHTWAVE TECHNOLOGY, vol. 36, no. 19, 28 May 2018 (2018-05-28), USA, pages 4640 - 4645, XP055764841, ISSN: 0733-8724, DOI: 10.1109/JLT.2018.2840223
- MELIKYAN ARGISHTI ET AL: "Inter-polarization mixers for coherent detection of optical signals", OPTICS EXPRESS, vol. 26, no. 14, 9 July 2018 (2018-07-09), US, pages 18523, XP055781349, ISSN: 1094-4087, DOI: 10.1364/OE.26.018523

## Description

### BACKGROUND

Embodiments of the present specification relate generally to light detection and ranging (lidar) system, and more particularly to a system and method for determining a range of a scene using frequency modulated continuous wave (FMCW) lidar imaging.

To determine a range of a scene, traditional systems rely on bulky mechanical devices such as, articulated and rotating mirrors, and gimbals. However, these devices are costly and potentially sensitive to mechanical failures and damage. Also, these devices limit the scan rate, decrease reliability, and increase the system cost. Hence, solid-state systems are being developed to replace these traditional systems.

In the solid-state systems, light detection and ranging (lidar) is a key technology which is widely used in different applications such as, autonomous driving and unmanned aerial vehicles. Also, lidar enables a host of other emerging technologies such as, aerial mapping and robotics. Typically, a lidar system includes a light source and an optical receiver. Further, the light source emits light having a predetermined wavelength towards a surrounding scene which then scatters the light. In response to emitting the light, some of the scattered light from the scene is received back at the optical receiver. Further, the lidar system determines the ranging of the scene based on one or more characteristics associated with the received scattered light. The ranging information may be further used to produce a three-dimensional (3D) image of at least a part of the scene, which in-turn is used for different applications such as, 3D mapping and autonomous decision making.

In the conventional lidar systems, two well-known methods such as, direct time-of-flight (TOF) method and frequency modulated continuous wave (FMCW) method are employed for determining the ranging of the scene. In the time-of-flight (TOF) method, a beam of pulsed light is scanned over the scene or the light is flashed at once over the entire scene. Further, range of the scene is determined by measuring the time between transmission and reception of the light signal. However, in this method, ambient light increases the noise floor of the receiver. As a result, the light scattered from weakly reflecting or distant targets can be too weak to detect, which in-turn may lead to corrupted measurements. Although the TOF method can achieve high frame rates, the TOF method has low sensitivity and poor resilience to ambient noise.

On the other hand, in the FMCW method, the FMCW light beam is frequency modulated hence, the range and the velocity of the scene can be determined by coherent detection of the frequency shift. However, due to the complexity of coherent detection, the light beam is scanned point-by-point by a beam scanner to cover the entire scene. By using frequency modulation and coherent detection, sensitivity is improved, and the impact of ambient noise is greatly reduced. Although the FMCW method can improve sensitivity and resilience to ambient noise, the FMCW method has low frame rate due to scanning of the scene.

Firooz Aflatouni ET AL: "Nanophotonic coherent imager", Optics Express, vol. 23, no. 4, 19 February 2015 (2015-02-19), page 5117, XP055764834, DOI: 10.1364/0E.23.005117, disclose a nanophotonic coherent imager. The imager includes a laser that is used to illuminate the target object that is being imaged. Also, a part of the laser output that is used to illuminate the target object is coupled into the input grating coupler through an optical fiber. Further, it is guided to Y-junction splitter network through nano-waveguides, to be used as a reference signal. On the other hand, in response to illuminating the target object, the incoming/reflected light from the target object is coupled into nano-waveguides through an array of grating couplers serving as pixels. Thereafter, the received light from each pixel is then combined with a part of the references in a Y-junction combiner and is converted to electrical current using a photo-detector.

Aude Martin ET AL: "Photonic Integrated Circuit-Based FMCW Coherent LiDAR", JOURNAL OF LIGHTWAVE TECHNOLOGY, vol. 36, no. 19, 1 October 2018 (2018-10-01), pages 4640-4645, XP055764841, USA ISSN: 0733-8724, DOI: 10.1109/JL T.2018.2840223, discloses a LiDAR system that includes reception ports (SN1) and emission ports (SN2). Further, emission channels from the emission ports are connected via optical fiber circulators (FC) to the corresponding photodiodes (BPD) at the reception ports. The emission ports (SN2) emit the laser power (E) via the collimation lenses. In response, the backscattered light (R) is collected by optical fiber circulators (FC) and redirects it to the reception ports (SN2). In parallel, another switching network (SN1) routes the local oscillator to the photodiodes on which the back-reflected signal or backscattered light (R) is incoming. Further, the photodiodes sum these photocurrents and are routed to the RF output.

Thus, there is a need for an improved system and method that aid in determining the ranging of the scene with high frame rate, high sensitivity, and strong resilience to ambient noise.

### BRIEF DESCRIPTION

In accordance with aspects of the present specification, a system for determining a range of a scene is presented. The system includes an optical source configured to generate an input signal, wherein the input signal is a frequency modulated coherent signal. Further, the system includes a first optical coupler coupled to the optical source and configured to tap a predetermined portion of the input signal as a local oscillator (LO) signal. Also, the system includes an emitting unit coupled to the first optical coupler and configured to receive and transmit a remaining portion of the input signal as an output signal onto the scene, and wherein the emitting unit (118) is configured to flash the scene (102) with the output signal (110). In addition, the system includes an imaging unit arranged to receive a plurality of return signals from the scene in response to the output signal. Further, the imaging unit includes an array of detectors optically and directly coupled to at least one lens, wherein a position of each detector is associated with a unique direction of the return signals received from the scene, wherein the at least one lens is configured to receive and direct the return signals onto the array of detectors, and further wherein each detector of the array is configured to receive and mix the local oscillator signal with a corresponding return signal of each detector thereby generating a radio frequency (RF) beat signal, wherein the RF beat signal is fit for determining the range of the scene), and wherein; each detector of the array of detectors comprises: a photodetector site configured to directly receive one of the return signals; and at least one waveguide evanescently coupled to the photodetector site and configured to receive the LO signal and distribute the local oscillator signal uniformly over the photodetector site thereby the local oscillator signal interferes with the one of the return signals.

In accordance with another aspect of the present specification, a method for determining a range of a scene is presented. The method includes generating, by an optical source, an input signal, wherein the input signal is a frequency modulated coherent signal. Further, the method includes tapping, by a first optical coupler, a predetermined portion of the input signal as a local oscillator (LO) signal. Also, the method includes transmitting, by an emitting unit configured to flash the scene (102), a remaining portion of the input signal as an output signal onto the scene. In addition, the method includes receiving, by an imaging unit comprising at least one lens and an array of detectors, a plurality of return signals from the scene in response to the output signal. Furthermore, the method includes directing, by the at least one lens directly coupled to the array of detectors, the return signals onto the array of detectors. Finally, the method includes mixing, by each of the array of detectors, the local oscillator signal with a corresponding return signal of each detector thereby generating a radio frequency (RF) beat signal, wherein the RF beat signal is fit for determining the range of the scene, wherein mixing the local oscillator signal with the return signals comprises: receiving, by the photodetector site in each detector, one of the return signals; distributing uniformly, by at least one waveguide evanescently coupled to the photodetector site, over the photodetector site whereby the local oscillator signal interferes with the one of the return signals.

### DRAWINGS

These and other features, aspects, and advantages of the present disclosure will become better understood when the following detailed description is read with reference to the accompanying drawings in which like characters represent like parts throughout the drawings, wherein:
FIG: 1 is a diagrammatical representation of a lidar system for determining a range of a scene, in accordance with aspects of the present specification;
FIG. 2 is a block diagram of the lidar system depicted in FIG. 1, in accordance with aspects of the present specification;
FIG. 3 is a perspective view of a waveguide coupled to a photodetector site, in accordance with one embodiment of the present specification;
FIG. 4 is a perspective view of a waveguide coupled to a photodetector site, in accordance with another embodiment of the present specification;
FIG. 5 is a perspective view of two waveguides coupled to a photodetector site, in accordance with yet another embodiment of the present specification;
FIG. 6 is a cross-sectional view of a detector depicting a flow of return signal and local oscillator signal, in accordance with one embodiment of the present specification;
FIG. 7 is a cross-sectional view of a balanced detector having a noise cancellation structure, in accordance with one embodiment of the present specification; and
FIG. 8 is a flow chart illustrating a method for determining the range of the scene, in accordance with aspects of the present specification.

### DETAILED DESCRIPTION

As will be described in detail hereinafter, various embodiments of systems and methods for determining a range of a scene is presented. In particular, a frequency modulated coherent optical signal is flashed over the scene. In response, return signals from different objects in the scene are received. Further, these return signals are processed to determine the range of the scene. Also, this systems and methods aid in determining the range of the scene with high frame rate, high sensitivity and resilience to ambient noise. This in-turn improves the detection range and resolution of objects in the scene.

In the following specification and the claims, reference will be made to a number of terms, which shall be defined to have the following meanings. The singular forms "a", "an", and "the" include plural references unless the context clearly dictates otherwise.

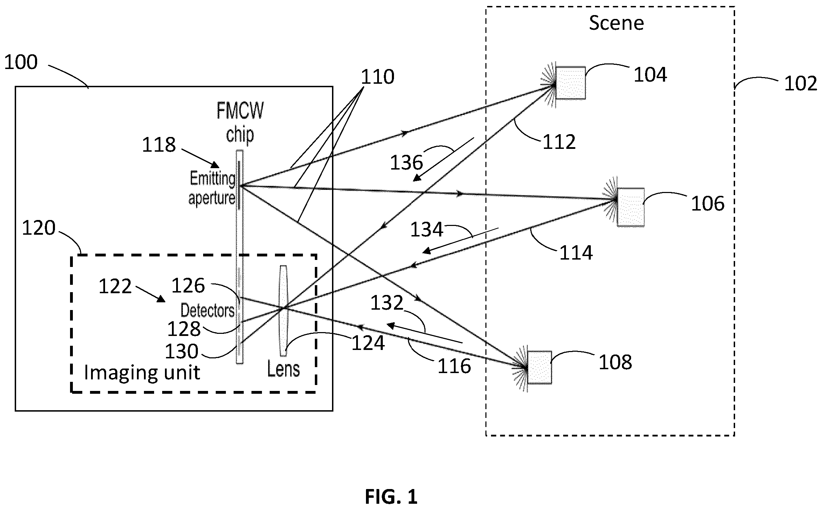

Turning now to the drawings and referring to FIG. 1, a diagrammatical representation of a system 100 for determining a range of a scene 102, in accordance with aspects of the present specification, is depicted. The scene 102 may include but not limited to surrounding structures or objects 104, 106, 108 such as, trees, plants, vegetation, buildings, and landscape. Further, the range of the scene 102 may be referred to as one or more parameters of the scene 102. In one example, the parameters may include velocity and distance of the scene 102. The velocity is defined as the relative speed and direction of travel of the objects 104-108 with respect to the system 100. Similarly, the distance is defined as the distance between the system 100 and the objects 104-108 in the scene 102.

In a presently contemplated configuration, the system 100 may be referred to as a light detection and ranging (lidar) system. It may be noted that the terms "system" and "lidar system" may be used interchangeably in the below description. The exemplary lidar system 100 is used as a remote sensing system for sensing and mapping surrounding structure or objects 104-108 of the scene 102. Also, the lidar system 100 may aid in ranging the scene in multiple directions. Moreover, the lidar system 100 employs lidar technology that has high potential to achieve long range and high resolution of the scene 102. In particular, the lidar system 100 transmits a frequency modulated continuous wave (FMCW) signal 110 in multiple directions towards the scene 102. The FMCW signal 110 is referred to as a continuous laser beam where the frequency is increased or decreased periodically by a modulating signal. In one example, the FMCW signal 110 may be a triangular wave having an up-chirp portion and a down-chirp portion. The up-chirp portion exhibits a linear increase in frequency versus time while, the down-chirp portion exhibits a linear decrease in frequency versus time. It may be noted that, in the exemplary lidar system 100, the FMCW signal 110 is flashed at once over the entire scene 102.

In response to transmitting the FMCW signal 110, a plurality of return signals 112-116 resulting from reflected scattering of the transmitted signal 110 by the scene 102 is received. It may be noted that the return signals 112-116 are referred to as echoed, scattered, or reflected signals of the transmitted FMCW signal 110 onto the scene 102. Further, the lidar system 100 determines the range of the scene 102 based on optical coherence between the transmitted FMCW signal 110 and the return signals 112-116. More specifically, the frequency shift in the return signals 112-116 as compared with the transmitted signal 110 is determined. Further, this frequency shift information is used to compute the range such as, the distance, the relative speed and the direction of travel of the objects 104-108 in the scene. Moreover, the lidar system 100 is extensively used in different applications such as, autonomous vehicles, atmospheric measurements, aerial mapping, and robotics.

In a conventional lidar system, the FMCW signal is transmitted to scan point-by-point to cover the entire scene. In particular, the FMCW signals are transmitted sequentially by a beam steerer over a plurality of objects in the scene. Further, the return signals from each object is processed sequentially to build an image of the scene. In other words, the conventional lidar system using the FMCW method is not designed or equipped to concurrently interrogate the scene in multiple directions. As a result, the conventional lidar system may have a low frame rate to image the scene, which in-turn delays imaging of the scene and provides low resolution.

To avoid the above shortcomings or problems, the exemplary lidar system 100 includes an emitting unit 118 and an imaging unit 120 that aid in imaging the scene 102 with high sensitivity and strong resilience to ambient noise and at a high frame rate. In particular, the emitting unit 118 flashes the FMCW signal 110 over the entire scene 102. Further, the objects 104-108 in the scene 102 may scatter or reflect at least a portion of the FMCW signal 110. Some of the scattered or reflected signals may return toward the lidar system 100. These reflected/scattered signals are then received concurrently by the imaging unit 120 as the return signals 112-116.

In the presently contemplated configuration, the imaging unit 120 includes an array of detectors 122 and one or more lenses 124 that are arranged in a way to concurrently receive the return signals 112-116 from the scene 102. More specifically, multiple detectors 122 are arranged to simultaneously interrogate the scene in multiple directions. These lenses 124 are optically coupled to the array of detectors 122 without a waveguide or any other coupling element. Also, these lenses 124 are directly coupled to the array of detectors 122. Further, the lenses 124 are configured to direct the return signals 112-116 received from the scene 102 onto the array of detectors 122.

Furthermore, the array of detectors 122 is arranged in such a way that each detector is dedicated to receive the signals 112-116 returning in a particular direction. Thus, different directions of the scene correspond to different detectors or pixels of the imaging unit. More specifically, the detectors 126, 128 130 are arranged in a predefined pattern as depicted in FIG. 1. Further, the position of each detector is associated with a unique direction of the scattered/return signals 112-116 received from the scene 102. For example, the first detector 126 is positioned to receive the signal 116 returning in a first direction 132. In a similar manner, the second detector 128 is positioned to receive the signal 114 returning in a second direction 134, and the third detector 130 is positioned to receive the signal 112 returning in a third direction 136. It may be noted that the detectors 126-130 may be positioned in any pattern and is not limited to the pattern depicted in FIG. 1. Also, the array of detectors 122 may be a two-dimensional (2D) array or a three-dimensional (3D) array.

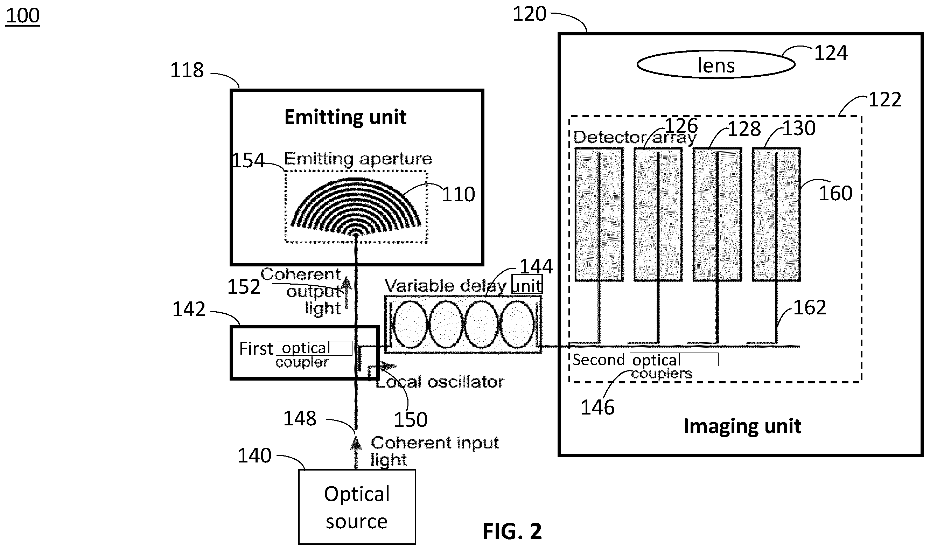

Further, each of the detectors 126-130 is configured to receive and mix the corresponding return signal with a local oscillator (LO) signal (shown in FIG. 2) to generate a radio frequency (RF) beat signal. The LO signal may be referred to as the signal having the frequency information of the FMCW signal 110. Thereafter, the RF beat signal may be processed and analyzed electronically to determine or calculate the range, such as the velocity and the distance of the scene. The range of the scene may aid in producing a three-dimensional (3D) image of parts of the surrounding scene, which can be used for applications such as 3D mapping and autonomous decision making. The aspects of positioning the array of detectors 122 and processing the return signals 112-116 will be explained in greater detail with references to FIGs. 2-7.

Thus, by employing the exemplary lidar system 100, the FMCW signal 110 is flashed at once over the entire scene and the return signals 112-116 are received concurrently from the scene 102. As a result, the frame rate to scan the entire scene 102 is substantially increased. This in-turn reduces the delay in imaging the scene 102. Also, as the FMCW signals are used, the lidar system 100 has high sensitivity and is resilient to the ambient noise, resulting in obtaining uncorrupted measurements of the scene 102. In addition, the speed of the lidar system 100 is substantially improved by performing ranging in multiple directions at once.

Referring to FIG. 2, a block diagram of the lidar system 100 for determining the range of the scene, in accordance with aspects of the present specification, is depicted. It may be noted that the emitting unit 118 and the imaging unit 120 are similar to the emitting unit 118 and the imaging unit 120 of FIG. 1, respectively. In addition to the emitting unit 118 and the imaging unit 120, the lidar system 100 includes an optical source 140, a first optical coupler 142, a variable delay unit 144, and a second optical coupler 146. It may be noted that the lidar system may include other components and is not limited to the components depicted in FIG. 2. Also, the lidar system 100 may be built in a single chip. Although most attractive when implemented entirely on the single chip, the system may be implemented wholly or partially with off-chip components such as the first optical coupler 142, the variable delay unit 144, and the emitting unit 118.

The optical source 140 is optically coupled to the first optical coupler 142. Further, the optical source 140 is configured to generate a frequency modulated continuous wave (FMCW) signal having a predetermined operating wavelength. In one embodiment, the FMCW signal is a continuous laser beam with a prescribed and continuous change in the frequency. This change in frequency information is later used for determining the distance and the velocity of the scene. Also, the generated FMCW signal is a coherent signal, that is a signal from a laser source with a coherence time larger than two times the longest expected round trip time. This ensures that the return signal remains coherent with the LO. In one example, the optical source 140 may be a single laser source that transmits the FMCW signal in multiple directions to illuminate the scene. Also, it may be noted that the frequency modulation of the light may be performed on-chip or off-chip to generate the FMCW signal.

Further, it may be noted that the operating wavelength of the FMCW signal may be in the ultraviolet, infrared, or visible portions of the electromagnetic spectrum. In one embodiment, the operating wavelength of the FMCW signal is selected from a range that is less sensitive to the ambient noise such as the sunlight. For example, the light produced by Sun may act as background noise which can obscure signal light detected by the lidar system. Also, this solar background noise can corrupt measurement of the lidar system 100. Thus, the operating wavelength and the power level of the FMCW signal is selected in such a way that the FMCW signal is less sensitive to the ambient or background noise. In one example, the operating wavelength may be in a range from about 700 nm to 2000 nm. Also, the power level of the FMCW signal is in a range from about 0.1 mW to about 10 W.

Upon generating the FMCW signal, the optical source 140 transmits the generated frequency modulated and coherent signal as an input signal 148 to the first optical coupler 142. As illustrated in FIG. 2, the first optical coupler 142 is electrically coupled to the emitting unit 118 and the variable delay unit 144. Also, the first optical coupler 142 is configured to receive the input signal 148 from the optical source 140. Thereafter, the first optical coupler 142 splits the input signal 148 into a local oscillator (LO) signal and an output signal. In particular, the first optical coupler 142 may tap the predetermined portion of the input signal 148 by first frequency chirping the input signal 148 and then transmit the remaining portion of the input signal 148 to the emitting unit 118. In one example, the first optical coupler 142 may include a directional coupler or a local oscillator tap or an MMI. Upon splitting the input signal 148, the first optical coupler 142 may transmit the tapped LO signal 150 to the variable delay unit 144.

The variable delay unit 144 is configured to reduce the decoherence between the LO signal 150 and the return signals 112-116 and manage frequency of the RF beat signal. In particular, the variable delay unit 144 is electrically coupled to the first optical coupler 142 and the imaging unit 120. Further, the variable delay unit 144 is configured to delay the transmission of the LO signal 150 to the imaging unit 120 so as to reduce decoherence between the LO signal 150 and the return signals 112-116. In one example, the variable delay unit 144 is included. The delay can be set to match the expected average range of the scene so that the LO and scattered signals have approximately the same time delay and the requirements for coherence time for the laser source is reduced. The delay can also be set so that the beat frequency is of an order in which the measurement is most sensitive. Thereafter, the variable delay unit 144 transmits the LO signal to the imaging unit 120.

Moving back to the first optical coupler 142, after tapping the input signal 148, the remaining portion of the input signal 148 is transmitted from the first optical coupler 142 to the emitting unit 118. Further, the emitting unit 118 is configured to transmit this portion of the input signal as an output signal 110 onto the scene 102. Typically, in the conventional lidar systems, the FMCW signal is scanned point-by-point by a beam scanner/steerer to cover the entire scene. Consequently, the frame rate is low in such conventional lidar systems. However, in the exemplary lidar system, the FMCW signal or the output signal 110 is flashed at once over the entire scene 102. Hence, the exemplary lidar system 100 has high frame rate. As depicted in FIG. 2, the emitting unit 118 includes an emitting aperture154 through which the output signal 110 is transmitted onto the scene 102. In one embodiment, the emitting unit 118 includes an optical phased array, a leaky wave antenna array, a grating coupler, an edge coupler, or any other suitable aperture that facilitates to transmit the output signal 110 in multiple directions towards the scene 102.

In response to transmitting the output signal 110 onto the scene 102, the imaging unit 120 is arranged to receive a plurality of return signals 112-116 from the scene 102. In particular, when the output signal 110 reaches the scene 102, the objects 104-108 in the scene 102 may scatter or reflect at least a portion of the output signal 110. Further, some of the scattered or reflected signals may return toward the lidar system 100. These scattered or reflected signals are then received by the imaging unit 120 of the lidar system 100 as the return signals 112-116.

As depicted in FIG. 2, the imaging unit 120 includes a second optical coupler 146, an array of detectors 122, and one or more lenses 124 (see FIG. 1). The array of detectors 122 is optically coupled to the one or more lenses 124 and electrically coupled to the second optical coupler 146. Further, the lenses 124 are configured to receive and direct the return signals onto the array of detectors 122.

Furthermore, the array of detectors 122 includes a plurality of detectors 126, 128, 130 that are configured to receive the return signals 112-116 via the one or more lenses 124. In one example, the array 122 may be one-dimensional or two-dimensional (2D) array. The 2D array of detectors may allow ranging to be performed along two axes without any beam steering. In particular, the detectors 126-130 are arranged in a desired pattern to receive the return signals 112-116 from the scene 102. More specifically, as depicted in FIG. 2, the position of each detector is associated with a unique direction of the scattered signals received from the scene. For example, the return signal 116 from the object 108 is received by the first detector 126. In a similar manner, the return signal 114 from the object 106 is received by the second detector 128. Further, the return signal 112 from the object 104 is received by the third detector 130. Thus, each detector is dedicated to receiving return signals in a particular direction from the scene 102. It may be noted that the array 122 may include any number of detectors and is not limited to the detectors shown in FIG. 2. Also, these detectors may be arranged in any pattern.

In addition, each detector is configured to receive the LO signal 150 via the second optical coupler 146. More specifically, the second optical coupler 146 is configured to split the LO signal 150 into multiple LO signals with equal power and transmit each LO signal to a corresponding detector. In one example, the second optical coupler 146 includes directional couplers to distribute the LO signal to the array of detectors. In another example, the second optical coupler may include MMIs, star-couplers, and splitter trees. The received LO signal 150 and the corresponding return signal may be orthogonal to each other and temporally coherent. Further, the received LO signal 150 is mixed with the corresponding return signal to generate a radio frequency (RF) beat signal that is further processed to determine the range of the scene 102.

In particular, each detector includes a photodetector site 160 and one or more waveguides 162. The photodetector site 160 is configured to receive one of the return signals via the one or more lenses 124. In one example, the width of the photodetector site 160 is in a range from about 2 µm to about 125 µm. Further, the length of the photodetector site 160 is in a range from about 2 µm to about 500 µm for a 2D array from 10 µm to about 2000 µm for a 1D array.

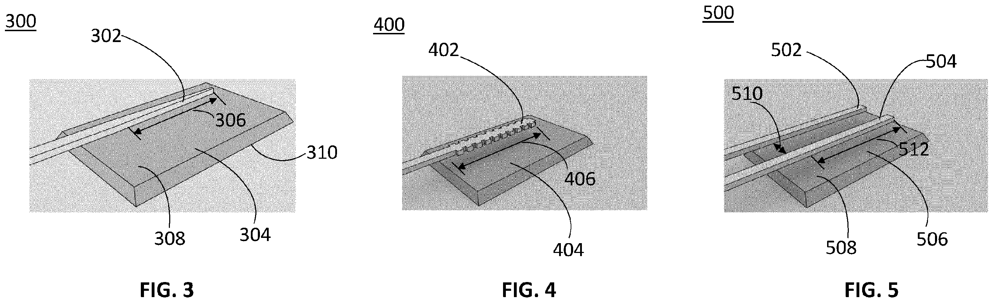

Further, the one or more waveguides 162 are coupled to the second optical coupler 146 and the photodetector site 160. Also, the one or more waveguides 162 are configured to receive the LO signal 150 and distribute uniformly over the photodetector site 160 so that the LO signal 150 interferes with the one of the return signals 112-116. This LO signal 150 and the return signal 112-116 interfere to generate an RF beat signal. In particular, since the return signal 112-116 and the LO signal 150 are coherent, the two signals interfere on the photodetector site, generating a RF beat signal. This RF beat signal has a frequency which is equal to the difference between the optical frequency of the return signal 112-116 and the LO signal 150. This frequency is referred to as the beat frequency between the LO signal 150 and the return signal 112-116. Further, the signal associated with this beat frequency may be referred to as the RF beat signal. Thereafter, the RF beat signal is processed electronically for determining the range of the scene 102. More specifically, the return signal 112-116 will have a different time delay compared to the LO signal 150. Further, as the input signal 148 is frequency modulated and the LO signal 150 interfere with the return signal 112-116, the RF beat signal frequency will encode the distance travelled by the return or scattered signal 112-116. The frequency of the RF beat signal is measured by an analog or digital electronic circuit to determine the distance of the scene. Further, if the target or objects in the scene is moving, a Doppler shift will occur in the return signal received from these objects or target. This Doppler shift is further detected in the RF beat signal to determine the velocity of the scene. In one example, the RF beat signal may be processed at a speed of 5 GHz. It may be noted the RF beat signal may be processed internally within the imaging unit 120 or by an external processing unit that is away from the imaging unit 120. The aspect of positioning the waveguide 162 on the photodetector site 160 and mixing the LO signal 150 with the return signals 112-116 will be explained in greater detail with reference to FIGs. 3-6.

Referring to FIG. 3, a perspective view 300 of a waveguide 302 coupled to a photodetector site 304, in accordance with one embodiment of the present specification, is depicted. The waveguide 302 may be similar to the waveguide 162 shown in FIG. 2. In the embodiment of FIG. 3, the waveguide 302 may be a tubular structure having a length in a range from about 2 µm to about 2000 µm and a width in a range from about 0.1 µm to about 100 µm The waveguide 302 is evanescently coupled to the photodetector site 304. In one example, the waveguide 302 may be positioned at a height of about 3 µm to about 25 µm above the photodetector site 304.

Further, the waveguide 302 includes a first portion 306 that is positioned on a top surface 308 of the photodetector site 304. The top surface 308 may be referred to as the surface that is used for receiving the return/scattered signals 112-116 from the scene 102. Further, the first portion 306 of the waveguide 302 may have a tapering structure as depicted in FIG. 3. In one example, the tapering structure may have a narrow end at a side farther away from the second optical coupler 146. Also, the tapering structure may have apertures on both sides of the waveguide 302. Further, the LO signal 150 may pass through these apertures and spread over the top surface 308 of the photodetector site 304. The LO signal 150 may propagate in a direction that is perpendicular to the length of the waveguide 302, while the return signal 112-116 may be directed perpendicular to the top surface of the photodetector site 304. As the waveguide 302 is tapered and placed on the surface 308 of the photodetector site 304, the LO signal 150 is distributed uniformly across the top surface 308 of the photodetector site 304, which in-turn increases mixing efficiency of the LO signal 150 and the return signals 112-116. In one embodiment, the waveguide 302 may be a straight waveguide.

In one embodiment, the waveguide 302, particularly the first portion 306 may be positioned or coupled to a bottom surface 310 of the photodetector site 304. Further, the LO signal 150 may mix with the return/scattered signals 112-116 within the photodetector site 304 to generate a RF beat signal. In one example, the photodetector site may have a thickness of 100 nm.

Moving now to FIG. 4, a perspective view 400 of a waveguide 402 coupled to a photodetector site 404, in accordance with another embodiment of the present specification. The waveguide 402 is similar to the waveguide of FIG. 3 except that the first portion 406 of the waveguide 402 may have a grating structure. Similar to the tapering structure, the grating structure may aid in uniformly distributing the LO signal 150 across the top surface 408 of the photodetector site 404. The advantage of this structure is the ability to engineer the radiation of light from the waveguide. This enables more uniform distribution of the LO signal on the photodetector site, which in-turn may improve mixing efficiency of the return and LO signals. The grating can be realized by designs such as sidewall corrugations, top surface corrugations, and periodic pillars or islands in a plane parallel to the waveguide plane.

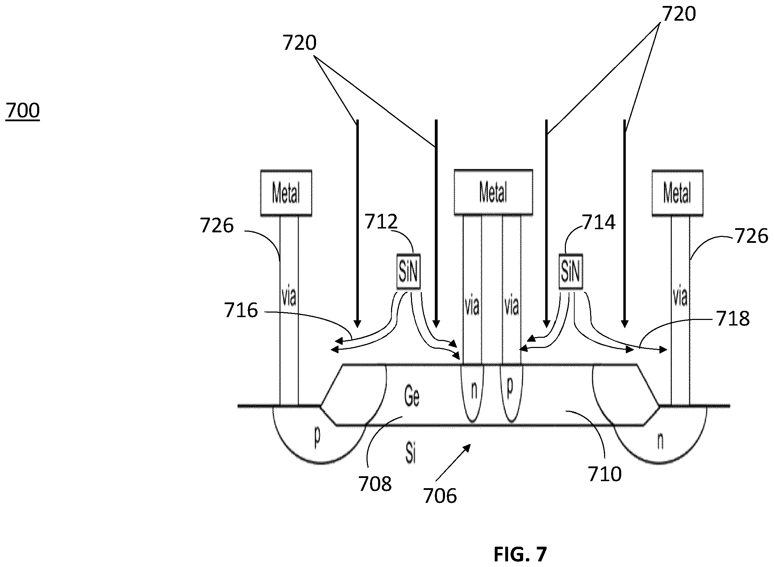

FIG. 5 is a perspective view 500 of waveguides 502, 504 coupled to a photodetector site 506, in accordance with yet another embodiment of the present specification. In this embodiment, two waveguides 502, 504 are positioned on the top surface 508 of the photodetector site 506. Also, these two waveguides 502, 504 are separated by a predetermined distance 510. In one example, the predetermined distance 510 may be in a range from about 2 µm to about 100 µm. Further, it may be noted that the first portion 512 of these two waveguides 502, 504 may include flat structure, tapering structure, and/or grating structure that are used for distributing uniformly the LO signal 150 across the top surface 508 of the photodetector site 506. In addition, these two waveguides 502, 504 along with the photodetector site 506 may form a balanced detector for cancelling the noise embedded in the return signals 112-116. The aspect of cancelling the noise will be described in greater detail with reference to FIG. 7.

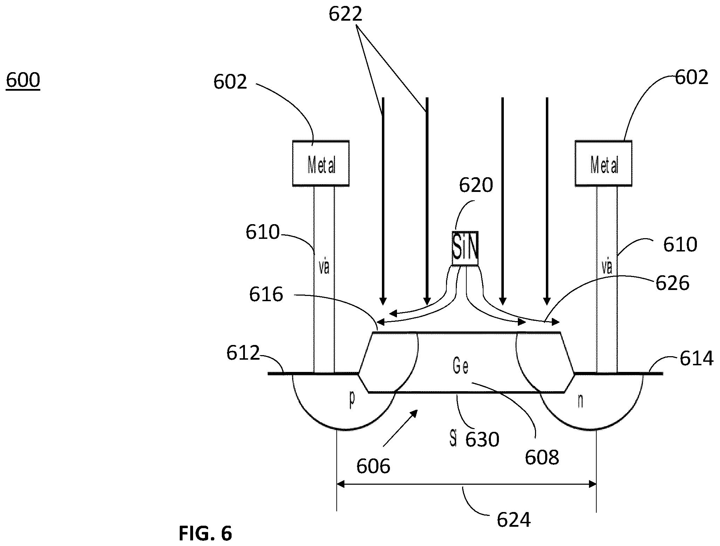

Referring to FIG. 6, a cross-sectional view of a detector 600 depicting flow of return signal and local oscillator (LO) signal, in accordance with one embodiment of the present specification, is depicted. It may be noted that the cross-sectional view of FIG. 6 is the representation of the waveguide and the photodetector site shown in FIGs. 3 and 4. The photodetector site 606 includes p-i-n junctions 608 and electrodes 610 coupled to metal terminals 602. The electrodes 610 are positioned on two ends 612, 614 on the top surface 616 of the photodetector site 606 for receiving the mixed LO and the scattered signals on the surface of the photodetector site. Further, the mixed LO and scattered signals are transmitted to a processor or controller via the metal terminals 602 for generating the RF beat signal which is further processed to determine the range of the scene. It may be noted that the positioning of the electrodes 610 is not limited to the top surface 616 as depicted in FIG. 6. In one embodiment, the electrodes may be positioned on the bottom surface of the photodetector site 606. In another embodiment, the photodetector site 606 may be in-built electrodes that may not protrude on the surface of the photodetector site 606.

In one embodiment, the photodetector site 606 includes germanium (Ge) material for near infrared (NIR) communication. In another embodiment, the photodetector site 606 includes silicon (Si) material for receiving the FMCW signal or return signal have operating wavelength less than 1 µm. In yet another embodiment, the photodetector site 606 includes III/V materials or other suitable semiconductor material for a multitude of wavelengths. In a similar manner, the waveguide 620 includes silicon nitride (SiN) material. Further, a transparent, low-index material such as silicon dioxide material may be positioned between the waveguide 620 and the photodetector site 606.

As depicted in FIG. 6, the scattered or return signals 622 are directed onto the surface 616 of the photodetector site 606. In one example, the direction of the scattered or returned signals 622 may be substantially perpendicular to the surface 616 of the photodetector site 606. Further, the photodetector site 606 includes an occlusion free portion 624 for receiving the return signals 622. In one embodiment, the occlusion free portion 624 may be referred to as the space on the photodetector site 606 that is between the electrodes 610 for receiving the scattered/return signals 622 without any hinderance from the electrodes 610. The occlusion free portion 624 includes a width in a range from about 2 µm to about 125 µm and a length in a range from about 2 µm to about 2000 µm.

Similarly, the waveguide 620 uniformly distributes the LO signal 626 onto the surface 616 of the photodetector site 606. In one example, the direction of the LO signal 626 may be substantially parallel to the surface 616 of the photodetector site 606. Further, the return signal 622 and the LO signal 626 are substantially orthogonal to each other on the photodetector site 606. Also, the return signal 622 and the LO signal 626 are coherent and interfering on the photodetector site 606 to generate the radio frequency (RF) beat signal.

In one embodiment, the waveguide 620 may be coupled to a bottom surface 630 of the photodetector site 606 while, the scattered/return signals 622 are directed onto the top surface 616 of the photodetector site 606. Further, the LO signal 626 may mix with the return signal 622 within the photodetector site 606 to generate a RF beat signal.

Referring to FIG. 7, a cross-sectional view of a detector 700 having a noise cancellation structure, in accordance with one embodiment of the present specification, is depicted. It may be noted that the cross-sectional view of FIG. 7 is the representation of the waveguides and the photodetector site shown in FIG. 5. The photodetector site 706 includes two p-i-n junctions 708, 710 that are connected in series, and a pair of electrodes 726 are positioned on two sides of each p-i-n junction for communicating the mixed LO and scattered signals to an external unit, such as a processing unit or a control unit (not shown).

Further, the detector 700 includes two waveguides 712, 714 that are coupled to the photodetector site 706 as depicted in FIG. 7. One of the waveguides 712 may be similar to the waveguide depicted in FIG. 6. Also, this waveguide 712 is configured to receive the LO signal 716 without any phase shift. However, the other waveguide 714 is referred to as a supporting waveguide that is configured to receive the LO signal 718 with a phase shift of 180 degrees. This phase shifted LO signal 718 may be used to cancel or suppress noise in the received scattered/return signals 720. In particular, the two p-i-n junctions 708, 710 generate two photocurrent signals, one signal is obtained by mixing the LO signal 716 with the return signals 720 and the other signal is obtained by mixing the phase shifted LO signal 718 with the return signals 720. Hence, the two photocurrent signals cancel each other when they are equal in magnitude and 180 degrees out of phase with each other. The difference between these two photocurrent signals may be referred to as the signal with no or suppressed noise. This signal is further processed to generate the range of the scene. As the noise rejection is inherent to coherent detection, the exemplary lidar system may consume less laser power compared to the conventional lidars.

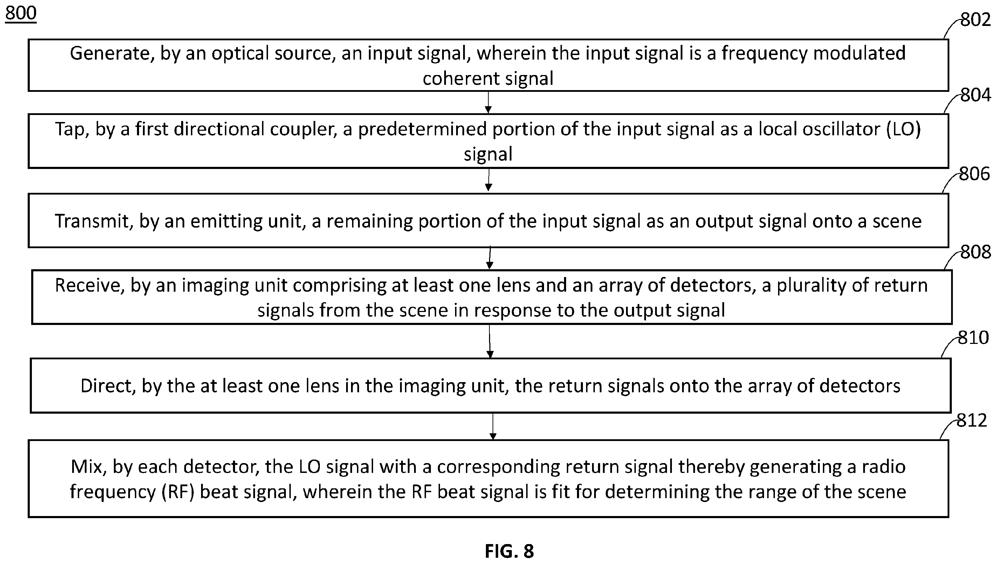

FIG. 8 is a flow chart illustrating a method 800 for determining the range of the scene, in accordance with aspects of the present specification. For ease of understanding, the method 800 is described with reference to the components of FIGs. 1-7. The method 800 begins with a step 802, where an optical source generates an input signal. It may be noted that the input signal is a frequency modulated coherent signal. The input signal may be referred to as a frequency modulated continuous laser beam with a prescribed and continuous change in the frequency. The input signal may also be referred as the FMCW signal.

Subsequently, at step 804, a first optical coupler taps a predetermined portion of the input signal as a local oscillator (LO) signal. In particular, the first optical coupler may tap the predetermined portion of the input signal by first frequency chirping the input signal and then transmit the remaining portion of the input signal to the emitting unit. In one example, the first optical coupler may include one or more directional couplers. Thereafter, the first optical coupler may transmit the tapped LO signal to the imaging unit via the variable delay unit.

In addition, at step 806, an emitting unit transmits a remaining portion of the input signal as an output signal onto the scene. In particular, the output signal which is frequency modulated continuous wave is flashed at once over the entire scene. Hence, the exemplary lidar system has high frame rate. As depicted in FIG. 2, the emitting unit includes an emitting aperture through which the output signal is transmitted onto the scene.

Furthermore, at step 808, an imaging unit receives a plurality of return signals from the scene in response to the output signal. In particular, when the output signal reaches the scene, the objects in the scene may scatter or reflect at least a portion of the output signal. Further, some of the scattered or reflected signals may return toward the lidar system. These reflected/scattered signals are then received by the imaging unit of the lidar system as the return signals.

Further, at step 810, at least one lens directs the return signals onto the array of detectors. The at least one lens is optically coupled to the array of detectors without any waveguide. In other words, these lenses are directly coupled to the array of detectors. Further, the lens is positioned in such a way that the return signals that are received on one side of the lens are directed onto the array of detectors positioned on the other side of the lens.

Thereafter, at step 812, each detector is configured to mix the LO signal with a corresponding return signal thereby generating a radio frequency (RF) beat signal. The RF beat signal is fit for determining the range of the scene. In particular, the detectors are arranged in a desired pattern to receive the return signals from the scene. More specifically, as depicted in FIG. 2, the position of each detector is associated with a unique direction of the return signals received from the scene. In addition, each detector is configured to receive the LO signal via the second optical coupler. Further, the received LO signal is mixed with the corresponding return signal to generate the radio frequency (RF) beat signal that is further processed to determine the range of the scene.

The various embodiments of the exemplary systems and methods presented hereinabove aid in determining the range of the scene with high frame rate and high sensitivity and strong resilience to the ambient noise. Also, the exemplary system may be included in a single chip FMCW that can support ranging in multiple directions without any beam steering. This in-turn improves long range and high resolution of the scene. Also, the exemplary lidar system requires less laser power compared to the conventional lidars due to inherent noise rejection feature in the exemplary lidar system, which in-turn reduces the cost of the lidar system. Moreover, the exemplary lidar system helps in reaching longer distance compared to the conventional lidars for the same laser power. In addition, automation of the automobiles and robotic systems may be substantially increased by using this low cost and low power lidar system.

While only certain features of the present disclosure have been illustrated and described herein, many modifications and changes will occur to those skilled in the art.

## Claims

1. A system (100) for determining a range of a scene (102), the system comprising:
an optical source (140) configured to generate an input signal (148), wherein the input signal (148) is a frequency modulated coherent signal;
a first optical coupler (142) coupled to the optical source (140) and configured to tap a predetermined portion of the input signal (148) as a local oscillator (LO) signal;
an emitting unit (118) coupled to the first optical coupler (142) and configured to receive and transmit a remaining portion of the input signal (148) as an output signal (110) onto the scene (102), and wherein the emitting unit (118) is configured to flash the scene (102) with the output signal (110);
an imaging unit (120) arranged to receive a plurality of return signals (112, 114, 116) from the scene (102) in response to the output signal; the imaging unit (120) comprises:
an array of detectors (122) optically coupled to at least one lens (124), wherein a position of each detector is associated with a unique direction of the return signals (112, 114, 116) received from the scene (102), wherein the at least one lens (124) is configured to receive and direct the return signals (112, 114, 116) onto the array of detectors (122), and further wherein
each detector of the array is configured to receive and mix the local oscillator signal with a corresponding return signal of each detector thereby generating a radio frequency (RF) beat signal, wherein the RF beat signal is fit for determining the range of the scene (102), **characterised in that**:
the array of detectors (122) is directly coupled without any waveguide to the at least one lens (124); and
each detector of the array of detectors (122) comprises:
a photodetector site (160) configured to directly receive one of the return signals (112, 114, 116); and
at least one waveguide (162) evanescently coupled to the photodetector site (160) and configured to receive the LO signal and distribute the local oscillator signal uniformly over the photodetector site (160) thereby the local oscillator signal interferes with the one of the return signals (112, 114, 116).

2. The system of claim 1, wherein the at least one waveguide (162) comprises at least one of a tapering structure (306) and a grating structure (406) at a portion that is coupled to the photodetector site (304, 404).

3. The system of any of the preceding claims, wherein each detector of the array of detectors (122) further comprises a supporting waveguide (714) coupled to the photodetector site (706) and configured to receive the local oscillator signal with a phase shift of 180 degrees so as to cancel noise in the received return signals.

4. The system of any of the preceding claims, wherein the photodetector site (606) comprises an occlusion free portion (624) for receiving the return signals (112, 114, 116), and wherein the occlusion free portion (624) includes a width in a range from about 2 µm to about 125 µm and a length in a range from about 2 µm to about 2000 µm.

5. The system of claim 1, wherein the return signals and the local oscillator signal are substantially orthogonal to each other on the photodetector site (606).

6. The system of claim 1, wherein the return signals and the local oscillator signal are coherent and interfering on the photodetector site (606) thereby generating the radio frequency beat signal.

7. The system of any of the claims 1 to 4, further comprising:
a variable delay unit (144) coupled to the first optical coupler (142) and configured to reduce decoherence between the local oscillator signal and the return signals and manage frequency of the RF beat signal; and
a second optical coupler (146) coupled to the variable delay unit (144) and configured to distribute the local oscillator signal onto the array of detectors (122) via the at least one waveguide (162).

8. The system of any of the foregoing claims, wherein the range includes at least one of velocity and distance of the scene.

9. A method for determining a range of a scene (102), the method comprising:
generating, by an optical source (140), an input signal (148), wherein the input signal is a frequency modulated coherent signal;
tapping, by a first optical coupler (142), a predetermined portion of the input signal as a local oscillator (LO) signal;
transmitting, by an emitting unit (118) configured to flash the scene (102), a remaining portion of the input signal as an output signal (110) onto the scene;
receiving, by an imaging unit (120) comprising at least one lens (124) and an array of detectors (122), a plurality of return signals (112, 114, 116) from the scene in response to the output signal;
directing, by the at least one lens (124) optically coupled to the array of detectors (122), the return signals (112, 114, 116) onto the array of detectors (122); and
mixing, by each of the array of detectors (122), the local oscillator signal with a corresponding return signal of each detector thereby generating a radio frequency (RF) beat signal, wherein the RF beat signal is fit for determining the range of the scene (102), **characterised in that**:
the array of detectors (122) is directly coupled without any waveguide to the at least one lens (124); and
mixing the local oscillator signal with the return signals comprises; directly
receiving, by the photodetector site (160) in each detector, one of the return signals;
distributing the local oscillator signal uniformly, by at least one waveguide (162) evanescently coupled to the photodetector site (160), over the photodetector site (160) whereby the local oscillator signal interferes with the one of the return signals.

10. The method of claim 9 further comprising receiving the return signals by an occlusion free portion (624) of the photodetector site (606).

11. The method of claim 9, wherein the return signals and the local oscillator signal are substantially orthogonal to each other on the photodetector site (606).

## Patentansprüche

1. System (100) zum Bestimmen eines Bereichs einer Szene (102), wobei das System umfasst:
eine optische Quelle (140), die dazu konfiguriert ist, ein Eingangssignal (148) zu erzeugen, wobei das Eingangssignal (148) ein frequenzmoduliertes kohärentes Signal ist;
einen ersten optischen Koppler (142), der mit der optischen Quelle (140) gekoppelt und dazu konfiguriert ist, einen vorbestimmten Abschnitt des Eingangssignals (148) als lokales Oszillator- (LO-) Signal abzugreifen;
eine Sendeeinheit (118), die mit dem ersten optischen Koppler (142) gekoppelt und dazu konfiguriert ist, einen restlichen Abschnitt des Eingangssignals (148) zu empfangen und als Ausgangssignal (110) auf die Szene (102) zu übertragen, und wobei die Sendeeinheit (118) dazu konfiguriert ist, die Szene (102) mit dem Ausgangssignal (110) zu blitzen;
eine Bildgebungseinheit (120), die dazu angeordnet ist, in Reaktion auf das Ausgangssignal eine Vielzahl von Rücksignalen (112, 114, 116) von der Szene (102) zu empfangen; wobei die Bildgebungseinheit (120) umfasst:
eine Detektoranordnung (122), die optisch mit mindestens einer Linse (124) gekoppelt ist, wobei eine Position jedes Detektors einer eindeutigen Richtung der von der Szene (102) empfangenen Rücksignale (112, 114, 116) zugeordnet ist, wobei die mindestens eine Linse (124) dazu konfiguriert ist, die Rücksignale (112, 114, 116) zu empfangen und auf die Detektoranordnung (122) zu lenken, und weiter wobei
jeder Detektor der Anordnung dazu konfiguriert ist, das lokale Oszillatorsignal zu empfangen und mit einem entsprechenden Rücksignal jedes Detektors zu mischen, wodurch ein Hochfrequenz- (HF-) Schwebungssignal erzeugt wird, wobei das HF-Schwebungssignal zum Bestimmen des Bereichs der Szene (102) geeignet ist, **dadurch gekennzeichnet, dass**:
die Detektoranordnung (122) ohne Wellenleiter direkt mit der mindestens einen Linse (124) gekoppelt ist; und
jeder Detektor der Detektoranordnung (122) umfasst:
eine Photodetektorstelle (160), die dazu konfiguriert ist, eines der Rücksignale (112, 114, 116) direkt zu empfangen; und
mindestens einen Wellenleiter (162), der mit der Photodetektorstelle (160) evaneszent gekoppelt und dazu konfiguriert ist, das LO-Signal zu empfangen und das lokale Oszillatorsignal gleichmäßig über die Photodetektorstelle (160) zu verteilen, wodurch das lokale Oszillatorsignal mit dem einen der Rücksignale (112, 114, 116) interferiert.

2. System nach Anspruch 1, wobei der mindestens eine Wellenleiter (162) an einem Abschnitt, der mit der Photodetektorstelle (304, 404) gekoppelt ist, mindestens eines von einer sich verjüngenden Struktur (306) und einer Gitterstruktur (406) umfasst.

3. System nach einem der vorstehenden Ansprüche, wobei jeder Detektor der Detektoranordnung (122) weiter einen unterstützenden Wellenleiter (714) umfasst, der mit der Photodetektorstelle (706) gekoppelt und dazu konfiguriert ist, das lokale Oszillatorsignal mit einer Phasenverschiebung von 180 Grad zu empfangen, um Rauschen in den empfangenen Rücksignalen zu unterdrücken.

4. System nach einem der vorstehenden Ansprüche, wobei die Photodetektorstelle (606) einen okklusionsfreien Abschnitt (624) zum Empfangen der Rücksignale (112, 114, 116) umfasst, und wobei der okklusionsfreie Abschnitt (624) eine Breite in einem Bereich von etwa 2 µm bis etwa 125 µm und eine Länge in einem Bereich von etwa 2 µm bis etwa 2000 µm beinhaltet.

5. System nach Anspruch 1, wobei die Rücksignale und das lokale Oszillatorsignal an der Photodetektorstelle (606) im Wesentlichen orthogonal zueinander sind.

6. System nach Anspruch 1, wobei die Rücksignale und das lokale Oszillatorsignal kohärent sind und an der Photodetektorstelle (606) interferieren, wodurch das Hochfrequenz-Schwebungssignal erzeugt wird.

7. System nach einem der Ansprüche 1 bis 4, weiter umfassend:
eine variable Verzögerungseinheit (144), die mit dem ersten optischen Koppler (142) gekoppelt und dazu konfiguriert ist, Dekohärenz zwischen dem lokalen Oszillatorsignal und den Rücksignalen zu verringern und die Frequenz des HF-Schwebungssignals zu verwalten; und
einen zweiten optischen Koppler (146), der mit der variablen Verzögerungseinheit (144) gekoppelt und dazu konfiguriert ist, das lokale Oszillatorsignal über den mindestens einen Wellenleiter (162) auf die Detektoranordnung (122) zu verteilen.

8. System nach einem der vorstehenden Ansprüche, wobei der Bereich mindestens eines von Geschwindigkeit und Entfernung der Szene beinhaltet.

9. Verfahren zum Bestimmen eines Bereichs einer Szene (102), wobei das Verfahren umfasst:
Erzeugen eines Eingangssignals (148) durch eine optische Quelle (140), wobei das Eingangssignal ein frequenzmoduliertes kohärentes Signal ist;
Abgreifen eines vorbestimmten Abschnitts des Eingangssignals durch einen ersten optischen Koppler (142) als lokales Oszillator- (LO-) Signal;
Übertragen eines restlichen Abschnitts des Eingangssignals durch eine Sendeeinheit (118), die dazu konfiguriert ist, die Szene (102) zu blitzen, als Ausgangssignal (110) auf die Szene;
Empfangen einer Vielzahl von Rücksignalen (112, 114, 116) von der Szene in Reaktion auf das Ausgangssignal durch eine Bildgebungseinheit (120), die mindestens eine Linse (124) und eine Detektoranordnung (122) umfasst;
Lenken der Rücksignale (112, 114, 116) durch die mindestens eine Linse (124), die optisch mit der Detektoranordnung (122) gekoppelt ist, auf die Detektoranordnung (122); und
Mischen des lokalen Oszillatorsignals durch jede der Detektoranordnungen (122) mit einem entsprechenden Rücksignal jedes Detektors, wodurch ein Hochfrequenz- (HF-) Schwebungssignal erzeugt wird, wobei das HF-Schwebungssignal zum Bestimmen des Bereichs der Szene (102) geeignet ist, **dadurch gekennzeichnet, dass**:
die Detektoranordnung (122) ohne Wellenleiter direkt mit der mindestens einen Linse (124) gekoppelt ist; und
das Mischen des lokalen Oszillatorsignals mit den Rücksignalen umfasst: direktes Empfangen eines der Rücksignale durch die Photodetektorstelle (160) in jedem Detektor;
gleichmäßiges Verteilen des lokalen Oszillatorsignals durch mindestens einen Wellenleiter (162), der mit der Fotodetektorstelle (160) evaneszent gekoppelt ist, über die Fotodetektorstelle (160), wodurch das lokale Oszillatorsignal mit dem einen der Rücksignale interferiert.

10. Verfahren nach Anspruch 9, das weiter das Empfangen der Rücksignale durch einen okklusionsfreien Abschnitt (624) der Photodetektorstelle (606) umfasst.

11. Verfahren nach Anspruch 9, wobei die Rücksignale und das lokale Oszillatorsignal an der Photodetektorstelle (606) im Wesentlichen orthogonal zueinander sind.

## Revendications

1. Système (100) permettant de déterminer une plage d'une scène (102), le système comprenant :
une source optique (140) configurée pour générer un signal d'entrée (148), dans lequel le signal d'entrée (148) est un signal cohérent modulé en fréquence ;
un premier coupleur optique (142) couplé à la source optique (140) et configuré pour prélever une partie prédéterminée du signal d'entrée (148) en tant que signal d'oscillateur local (LO) ;
une unité d'émission (118) couplée au premier coupleur optique (142) et configurée pour recevoir et transmettre une partie restante du signal d'entrée (148) en tant que signal de sortie (110) sur la scène (102), et dans lequel l'unité d'émission (118) est configurée pour faire clignoter la scène (102) avec le signal de sortie (110) ;
une unité d'imagerie (120) conçue pour recevoir une pluralité de signaux de retour (112, 114, 116) de la scène (102) en réponse au signal de sortie ; l'unité d'imagerie (120) comprend :
un réseau de détecteurs (122) couplés optiquement à au moins une lentille (124), dans lequel une position de chaque détecteur est associée à une direction unique des signaux de retour (112, 114, 116) reçus de la scène (102), dans lequel la au moins une lentille (124) est configurée pour recevoir et diriger les signaux de retour (112, 114, 116) sur le réseau de détecteurs (122), et en outre dans lequel
chaque détecteur du réseau est configuré pour recevoir et mélanger le signal de l'oscillateur local avec un signal de retour correspondant de chaque détecteur, générant ainsi un signal de battement de radiofréquence (RF), dans lequel le signal de battement RF est adapté pour déterminer la plage de la scène (102), **caractérisé en ce que** :
le réseau de détecteurs (122) est directement couplé sans aucun guide d'ondes à la au moins une lentille (124) ; et
chaque détecteur du réseau de détecteurs (122) comprend :
un site photodétecteur (160) configuré pour recevoir directement l'un des signaux de retour (112, 114, 116) ; et
au moins un guide d'ondes (162) couplé de manière évanescente au site photodétecteur (160) et configuré pour recevoir le signal LO et distribuer le signal de l'oscillateur local uniformément sur le site photodétecteur (160), de sorte que le signal d'oscillateur local interfère avec l'un des signaux de retour (112, 114, 116).

2. Système selon la revendication 1, dans lequel le au moins un guide d'ondes (162) comprend au moins l'une d'une structure conique (306) et d'une structure de réseau (406) au niveau d'une partie qui est couplée au site photodétecteur (304, 404).

3. Système selon l'une quelconque des revendications précédentes, dans lequel chaque détecteur du réseau de détecteurs (122) comprend en outre un guide d'ondes de support (714) couplé au site photodétecteur (706) et configuré pour recevoir le signal de l'oscillateur local avec un déphasage de 180 degrés de manière à annuler le bruit dans les signaux de retour reçus.

4. Système selon l'une quelconque des revendications précédentes, dans lequel le site photodétecteur (606) comprend une partie sans occlusion (624) pour recevoir les signaux de retour (112, 114, 116), et dans lequel la partie sans occlusion (624) inclut une largeur dans une plage d'environ 2 µm à environ 125 µm et une longueur dans une plage d'environ 2 µm à environ 2000 µm.

5. Système selon la revendication 1, dans lequel les signaux de retour et le signal de l'oscillateur local sont sensiblement orthogonaux les uns aux autres sur le site photodétecteur (606).

6. Système selon la revendication 1, dans lequel les signaux de retour et le signal de l'oscillateur local sont cohérents et interfèrent sur le site photodétecteur (606), générant ainsi le signal de battement de radiofréquence.

7. Système selon l'une quelconque des revendications 1 à 4, comprenant en outre :
une unité de retard variable (144) couplée au premier coupleur optique (142) et configurée pour réduire la décohérence entre le signal de l'oscillateur local et les signaux de retour et gérer la fréquence du signal de battement RF ; et
un second coupleur optique (146) couplé à l'unité de retard variable (144) et configuré pour distribuer le signal de l'oscillateur local sur le réseau de détecteurs (122) par le biais de l'au moins un guide d'ondes (162).

8. Système selon l'une quelconque des revendications précédentes, dans lequel la plage inclut au moins l'une parmi la vitesse et la distance de la scène.

9. Procédé de détermination d'une plage d'une scène (102), le procédé comprenant :
la génération, par une source optique (140), d'un signal d'entrée (148), dans lequel le signal d'entrée est un signal cohérent modulé en fréquence ;
le prélèvement, par un premier coupleur optique (142), d'une partie prédéterminée du signal d'entrée en tant que signal de l'oscillateur local (LO) ;
la transmission, par une unité d'émission (118) configurée pour faire clignoter la scène (102), d'une partie restante du signal d'entrée en tant que signal de sortie (110) sur la scène ;
la réception, par une unité d'imagerie (120) comprenant au moins une lentille (124) et un réseau de détecteurs (122), d'une pluralité de signaux de retour (112, 114, 116) de la scène en réponse au signal de sortie ;
la direction, par la au moins une lentille (124) couplée optiquement au réseau de détecteurs (122), des signaux de retour (112, 114, 116) sur le réseau de détecteurs (122) ; et
le mélange, par chacun du réseau de détecteurs (122), du signal de l'oscillateur local avec un signal de retour correspondant de chaque détecteur, générant ainsi un signal de battement de radiofréquence (RF), dans lequel le signal de battement RF est adapté pour déterminer la plage de la scène (102), **caractérisé en ce que** :
le réseau de détecteurs (122) est directement couplé sans aucun guide d'ondes à la au moins une lentille (124) ; et
le mélange du signal de l'oscillateur local avec les signaux de retour comprend : la réception directe, par le site photodétecteur (160) dans chaque détecteur, de l'un des signaux de retour ;
la distribution du signal de l'oscillateur local uniformément, par au moins un guide d'ondes (162) couplé de manière évanescente au site photodétecteur (160), sur le site photodétecteur (160), selon lequel le signal de l'oscillateur local interfère avec l'un des signaux de retour.

10. Procédé selon la revendication 9 comprenant en outre la réception des signaux de retour par une partie sans occlusion (624) du site photodétecteur (606).

11. Procédé selon la revendication 9, dans lequel les signaux de retour et le signal de l'oscillateur local sont sensiblement orthogonaux les uns aux autres sur le site photodétecteur (606).
